# EUROPEAN PATENT APPLICATION

(11) **EP 4 841 139 A1**
(43) Date of publication of application: **18.11.2026**
(21) Application number: 24916891.5
(22) Date of filing: 20.12.2024
(51) Int. Cl.: F16K 11/074, F16K 31/04

(54) **SWITCHING VALVE**

(30) Priority: 09.01.2024 JP 2024001286
(71) Applicant: Eagle Industry Co., Ltd., Minato-ku Tokyo 105-8587 (JP)
(72) Inventor: MATSUZAKI, Akitaka, Tokyo 105-8587 (JP); AKIYOSHI, Norimitsu, Tokyo 105-8587 (JP); KAWATO, Tadanobu, Tokyo 105-8587 (JP); KONDO, Shinji, Tokyo 105-8587 (JP); OGAWA, Noriyuki, Tokyo 105-8587 (JP)
(74) Representative: WSL Patentanwälte Partnerschaft mbB
(86) International application number: PCT/JP2024/045221
(87) International publication number: WO 2025/150389

(57) **Abstract**

A switching valve capable of highly precisely disposing a driven valve body at a desired rotation position is provided. A drive valve body 10 is rotatable in a first circumferential direction and a second circumferential direction opposed to the first circumferential direction, the drive valve body 10 has a drive shaft 61 that protrudes toward a driven valve body 20, the driven valve body 20 has a driven shaft 62 that protrudes toward the drive valve body 10, and a restricting device 40 is provided to restrict the rotation of the driven valve body 20 in the second circumferential direction when power is transmitted from the drive shaft 61 of the drive valve body 10 to the driven shaft 62 of the driven valve body 20 upon the rotation of the drive valve body 10 in the first circumferential direction.

## Description

### {TECHNICAL FIELD}

The present invention relates to a switching valve, for example, a switching valve that switches a flow path through which a fluid flows.

### {BACKGROUND ART}

In various industrial fields, fluid circuits are used in which a fluid supply source and a fluid load such as a fluid working device or a heat exchanger are connected by a flow path. Some of these fluid circuits are provided with a switching valve that switches the flow path of the working fluid, thereby realizing a plurality of modes for operating the fluid load using a single fluid circuit.

For example, a switching valve of Patent Citation 1 includes a valve casing having a first valve seat, a second valve seat, and a third valve seat, a main valve body rotatably disposed between the first valve seat and the second valve seat inside the valve casing, an auxiliary valve body rotatably disposed between the second valve seat and the third valve seat inside the valve casing, and a drive shaft driving the main valve body and the auxiliary valve body. The first valve seat is provided with a first port to a third port, and the second valve seat is provided with a first communication hole and a second communication hole.

The drive shaft includes a first drive unit which drives the main valve body and a second drive unit which drives the auxiliary valve body. The first drive unit is fixed to rotate together with the main valve body. The second drive unit is a drive pin with a semicircular cross-section formed on the drive shaft, and the straight part of the semicircle serves as the drive surface. The auxiliary valve body has a fan-shaped drive hole with a center angle of 270 degrees. The second drive unit is inserted into the drive hole of the auxiliary valve body, and as long as the drive surface rotates within the center angle of the drive hole, the drive surface rotates independently without driving the auxiliary valve body, and when the drive surface rotates beyond the center angle of the drive hole, the drive surface rotates together with the auxiliary valve body. That is, the drive shaft can rotate the main valve body alone and rotate the main valve body and the auxiliary valve body together.

The main valve body is switchable between a first communication position where the first port communicates with the second port and a second communication position where the first port communicates with the third port. Further, the auxiliary valve body is switchable between a blocking position and an opening position of the second communication hole. When the auxiliary valve body is located at the opening position, the first port to the third port communicate with each other through the first communication hole and the second communication hole. Accordingly, it is possible to switch between a first mode in which the main valve body is located at the first communication position and the auxiliary valve body is located at the blocking position, a second mode in which the main valve body is located at the second communication position and the auxiliary valve body is located at the blocking position, and a third mode in which the main valve body is located at the second communication position and the auxiliary valve body is located at the opening position.

### {CITATION LIST}

### {Patent Literature}

Patent Citation 1: JP 2015-218893 A (Page 13, FIG. 4)

### {SUMMARY OF INVENTION}

### {Technical Problem}

In the switching valve of Patent Citation 1, one drive shaft is used to rotate the main valve body alone and rotate the main valve body and the auxiliary valve body together by switching the contact state and the non-contact state between the second drive unit and the inner surface of the drive hole of the auxiliary valve body, but when the second drive unit contacts the inner surface of the drive hole of the auxiliary valve body due to vibration or the like when the main valve body rotates alone, there is a risk that the auxiliary valve body will rotate and deviate from the desired position.

The present invention has been made in view of such problems and an object of the present invention is to provide a switching valve capable of highly precisely disposing a driven valve body at a desired rotation position.

### {Solution to Problem}

In order to solve the foregoing problem, a switching valve according to the present invention is a switching valve including: a housing; a drive valve body and a driven valve body which are disposed in a valve chamber formed inside the housing and configured to rotate relative to the housing; and a drive device which is connected to the drive valve body and is configured to rotate the drive valve body, wherein the housing is provided with a plurality of ports which are configured to communicate with the valve chamber and into and from which a fluid flows, wherein when the drive valve body and the driven valve body rotate, a flow path is switchable by changing a combination of the plurality of ports to be connected, wherein the drive valve body is configured to be rotatable in any one of a first circumferential direction and a second circumferential direction opposed to the first circumferential direction, wherein the drive valve body has a drive shaft protruding toward the driven valve body, wherein the driven valve body has a driven shaft protruding toward the drive valve body, and wherein the switching valve further comprises a restricting device configured to restrict a rotation of the driven valve body in the second circumferential direction when power is transmitted from the drive shaft of the drive valve body to the driven shaft of the driven valve body upon a rotation of the drive valve body in the first circumferential direction. According to the feature of the present invention, since the restricting device can prevent the positional deviation of the driven valve body in the non-following state in which the drive valve body and the driven valve body rotate relative to each other, the driven valve body can be highly precisely disposed at a desired rotation position.

It may be preferrable that the restricting device has a plurality of circumferential restricting positions. According to this preferable configuration, the driven valve body can be highly precisely disposed at a plurality of rotation positions.

It may be preferable that the restricting device is a ratchet mechanism that includes a protrusion member provided on a housing side and a step portion provided on the driven valve body and engageable with the protrusion member and that is configured to allow the rotation of the driven valve body in the first circumferential direction and to restrict rotation of the drive valve body in the second circumferential direction. According to this preferable configuration, the ratchet mechanism is mechanically used to allow rotation of the driven valve body to one side and restrict rotation of the driven valve body to the other side.

It may be preferable that the protrusion member has a contact member swingably provided on an inner peripheral portion of the housing accommodating the driven valve body and an elastic member configured to bias the contact member toward the driven valve body According to this preferable configuration, since the elastic member biases the contact member toward an engagement position with the step portion, the rotation of the driven valve body to the other side can be reliably restricted in the non-following state, and the contact member retracts to a position not engaging with the step portion in the following state, thereby allowing the driven valve body to rotate to one side.

It may be preferable that the step portion is formed by notching the driven valve body. According to this preferable configuration, the structure of the switching valve can be made compact.

It may be preferable that the driven valve body is formed in a disk shape and have a plurality of passages, and the step portion is formed between the passages. According to this preferable configuration, the driven valve body can be made compact while ensuring strength.

It may be preferable that the protrusion member configured to engage with the step portion in a direction different from an opening direction of an opening of the passage. According to this preferable configuration, the contact member can be made less susceptible to the influence of the fluid flowing from the valve chamber into the passage.

It may be preferable that the passage is formed to vertically penetrate the driven valve body, and the step portion may be formed on an outer peripheral surface of the driven valve body. According to this preferable configuration, gravity is less likely to influence the engagement between the contact member and the valve body.

### {BRIEF DESCRIPTION OF DRAWINGS}

FIG. 1 is a perspective view showing a switching valve according to a first embodiment of the present invention.
FIG. 2 is a cross-sectional view showing the switching valve according to the first embodiment.
FIG. 3 is a plan view of an upper cover in the first embodiment.
FIG. 4 is a plan view of a lower cover in the first embodiment.
FIG. 5 is a plan view showing a casing and a drive valve body in the first embodiment.
FIG. 6 is a bottom view showing a casing and a driven valve body in the first embodiment.
FIG. 7 is a cross-sectional view taken along line A-A of FIG. 2.
FIG. 8A is a schematic view showing an engagement state of a ratchet mechanism in the first embodiment and FIG. 8B is a schematic view showing a non-engagement state of the ratchet mechanism.
FIG. 9 is a schematic cross-sectional view showing a structure of the ratchet mechanism.
FIG. 10 is a schematic view showing a first flow path pattern in the first embodiment.
FIG. 11 is a schematic view showing a second flow path pattern in the first embodiment.
FIG. 12 is a schematic view showing a third flow path pattern in the first embodiment.
FIG. 13 is a schematic view showing a fourth flow path pattern in the first embodiment.
FIG. 14 is a schematic view showing a state of the ratchet mechanism when transitioning from the third flow path pattern to the fourth flow path pattern.
FIG. 15 is a cross-sectional view showing a switching valve according to a second embodiment of the present invention.

### {DESCRIPTION OF EMBODIMENTS}

Modes for carrying out a switching valve according to the present invention will be described on the basis of embodiments.

### {First embodiment}

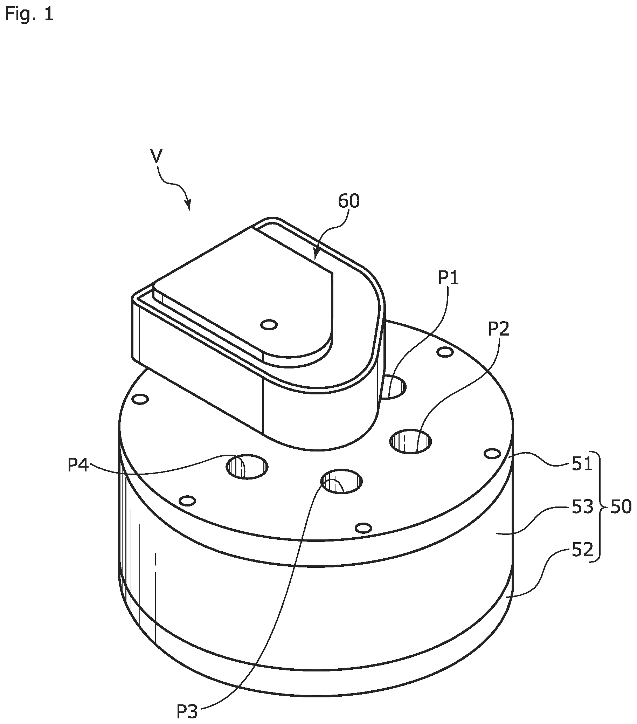

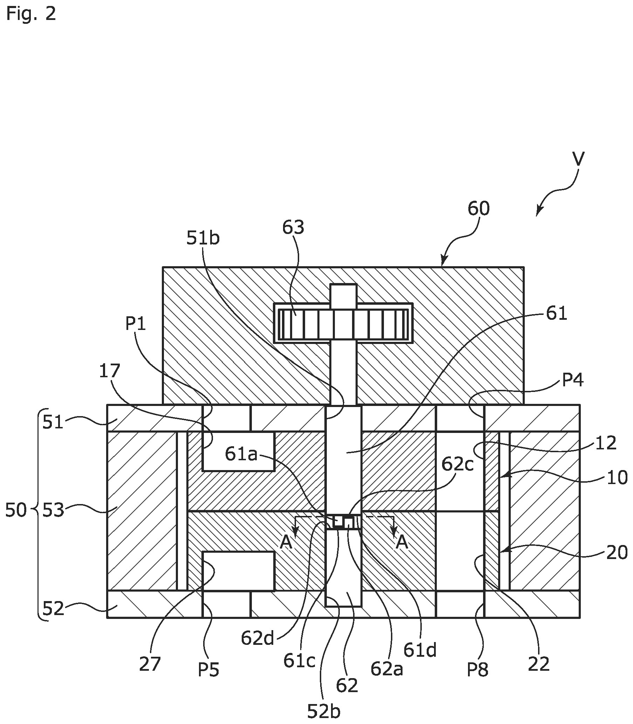

A switching valve according to a first embodiment will be described with reference to FIGS. 1 to 14. In the following description, the top and bottom of FIG. 2 will be referred to as the top and bottom of the switching valve. Specifically, the upper side of the paper on which a motor is disposed is the upper side of the switching valve, and the lower side of the paper as the opposite side thereof is the lower side of the switching valve.

A switching valve V of the present invention is used to select one of a plurality of modes of a fluid circuit and to switch a flow path through which a working fluid flows.

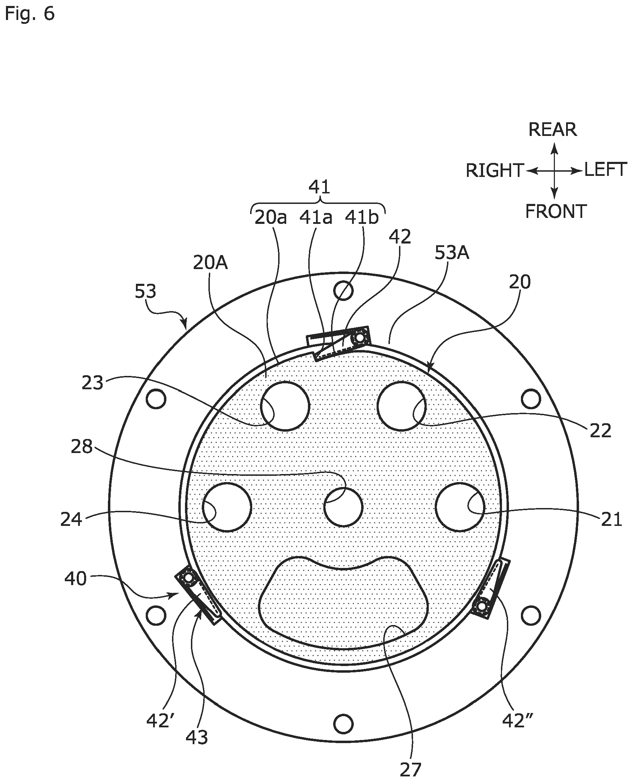

As shown in FIGS. 1 and 2, the switching valve V is mainly composed of a drive valve body 10, a driven valve body 20, a housing 50, a drive unit 60, and a ratchet mechanism 40 (see FIG. 6) as a restricting device.

The housing 50 is composed of disk-shaped upper and lower covers 51 and 52 and a cylindrical casing 53. The upper cover 51, the lower cover 52, and the casing 53 are made of a metal material or a resin material.

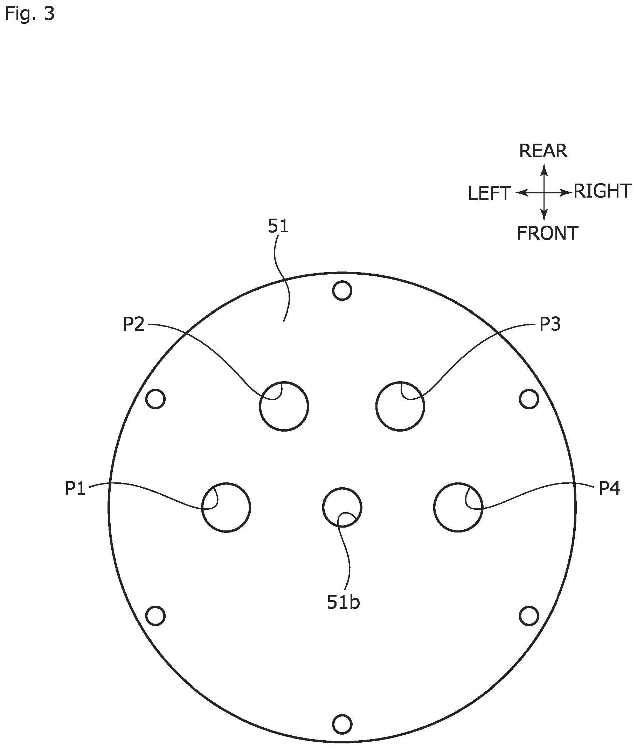

As shown in FIGS. 2 and 3, the upper cover 51 is fastened to the casing 53 with bolts (not shown) so as to close the upper opening of the casing 53. This upper cover 51 is provided with a first port P1, a second port P2, a third port P3, and a fourth port P4 that penetrate vertically.

Further, a through-hole portion 51b is provided at the center of the upper cover 51, and as will be described later, a drive shaft 61 is rotatably inserted therethrough (see FIG. 2).

The first port P1 and the third port P3 function as inlet ports through which a working fluid discharged from an external fluid load (not shown) flows into the switching valve V.

The second port P2 and the fourth port P4 function as outlet ports through which a working fluid inside the switching valve V flows toward an external fluid load (not shown).

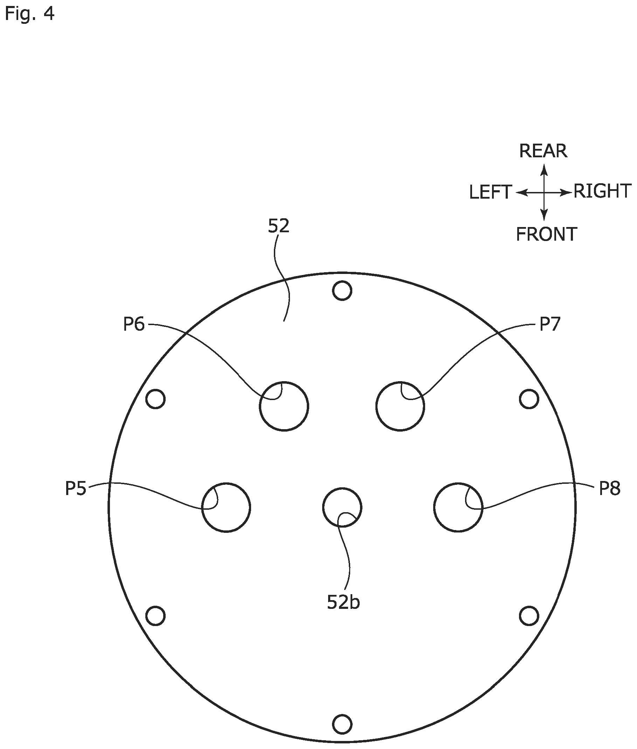

The lower cover 52 is fastened to the casing 53 with bolts (not shown) so as to close the lower opening of the casing 53. As shown in FIG. 4, this lower cover 52 is provided with a fifth port P5, a sixth port P6, a seventh port P7, and an eighth port P8 that penetrate vertically. The fifth port P5 corresponds to the first port P1 at the top and bottom, the sixth port P6 corresponds to the second port P2 at the top and bottom, the seventh port P7 corresponds to the third port P3 at the top and bottom, and the eighth port P8 corresponds to the fourth port P4 at the top and bottom.

Further, a recess 52b that opens upward is provided at the center of the lower cover 52, and the lower end of the driven shaft 62 is rotatably inserted thereinto (see FIG. 2).

The fifth port P5 and the seventh port P7 function as outlet ports through which a working fluid inside the switching valve V flows toward an external fluid load (not shown).

The sixth port P6 and the eighth port P8 function as inlet ports through which a working fluid discharged from an external fluid load (not shown) flows into the switching valve V.

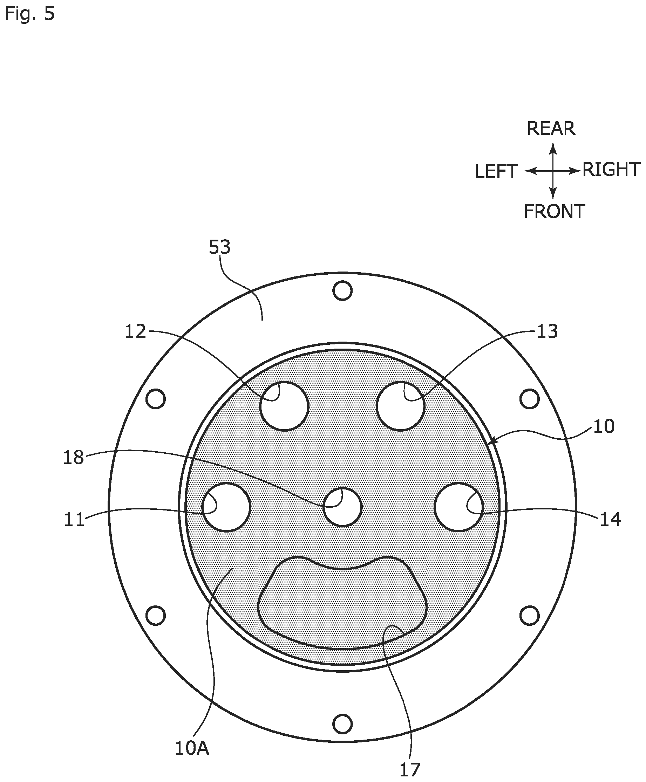

Next, the drive valve body 10 will be described with reference to FIG. 5.

The drive valve body 10 is formed in a disk shape. The drive valve body 10 is provided with through-holes 11, 12, 13, and 14 as passages, a communication groove 17, and an insertion hole 18.

The insertion hole 18 penetrates the center portion of the drive valve body 10, and the drive shaft 61 is press-inserted and fixed thereinto. In this way, in the present invention, "the drive valve body has a drive shaft protruding toward the driven valve body" may mean that a separate drive shaft is fixed to the drive valve body as in this embodiment, or, although not directly shown in the drawings, the drive valve body and the drive shaft may be formed integrally. The same applies to the driven valve body and the driven shaft.

The through-hole 11 is provided at the 9 o'clock position of the drive valve body 10 when viewed from above. The through-hole 12 is provided at the 11 o'clock position of the drive valve body 10. The through-hole 13 is provided at the 1 o'clock position of the drive valve body 10. The through-hole 14 is provided at the 3 o'clock position of the drive valve body 10.

The communication groove 17 is a groove that opens upward and has a concave cross-section. The communication groove 17 has a generally rectangular shape that is curved so as to connect the 5 o'clock position and the 7 o'clock position of the drive valve body 10.

Packings (not shown) are fixedly provided on the upper edges of the through-holes 11, 12, 13, and 14 and the communication groove 17. Further, packings (not shown) are also fixedly provided at the lower edges of the through-holes 11, 12, 13, and 14.

Next, the driven valve body 20 will be described with reference to FIG. 6.

The driven valve body 20 is provided with through-holes 21, 22, 23, and 24 as passages, a communication groove 27, and an insertion hole 28. The insertion hole 28 penetrates the center portion of the driven valve body 20, and the driven shaft 62 is press-inserted and fixed thereinto. Packings (not shown) are fixedly provided at the lower edges of these through-holes 21, 22, 23, and 24 and the communication groove 27.

The through-hole 21 is provided at the 3 o'clock position of the driven valve body 20 when viewed from below. The through-hole 22 is provided at the 1 o'clock position of the driven valve body 20. The through-hole 23 is provided at the 11 o'clock position of the driven valve body 20. The through-hole 24 is provided at the 9 o'clock position of the driven valve body 20.

The communication groove 27 is a groove that opens downward and has a concave cross-section. The communication groove 27 has a generally rectangular shape that is curved so as to connect the 5 o'clock position and the 7 o'clock position of the driven valve body 20.

Further, a step portion 41 forming a part of the ratchet mechanism 40 to be described later is formed at one position of an outer peripheral portion 20A of the driven valve body 20 by notching a part of the outer peripheral portion 20A. The step portion 41 is composed of an outer peripheral surface 20a of the driven valve body 20, an end surface 41a extending radially inward from the clockwise end of the outer peripheral surface 20a when viewed from below, and an inclined surface 41b extending from the radially inner end of the end surface 41a to the radially outer side in a clockwise direction when viewed from below and continuous with the outer peripheral surface 20a. The step portion 41 is provided between the through-holes 22 and 23 in the circumferential direction.

Returning to FIG. 2, the drive unit 60 is mainly composed of a drive shaft 61, a driven shaft 62, and a drive device 63.

The drive device 63 is a device that transmits an external driving force to the outer peripheral surface of the upper end of the drive shaft 61. For example, the drive device 63 of this embodiment includes a stepping motor, a gear box, and a rotary encoder, and is capable of rotating the drive valve body 10 to any rotation position around the drive shaft 61. Furthermore, the drive device 63 is not limited to a stepping motor, but may be anything that can rotate in both directions in the circumferential direction.

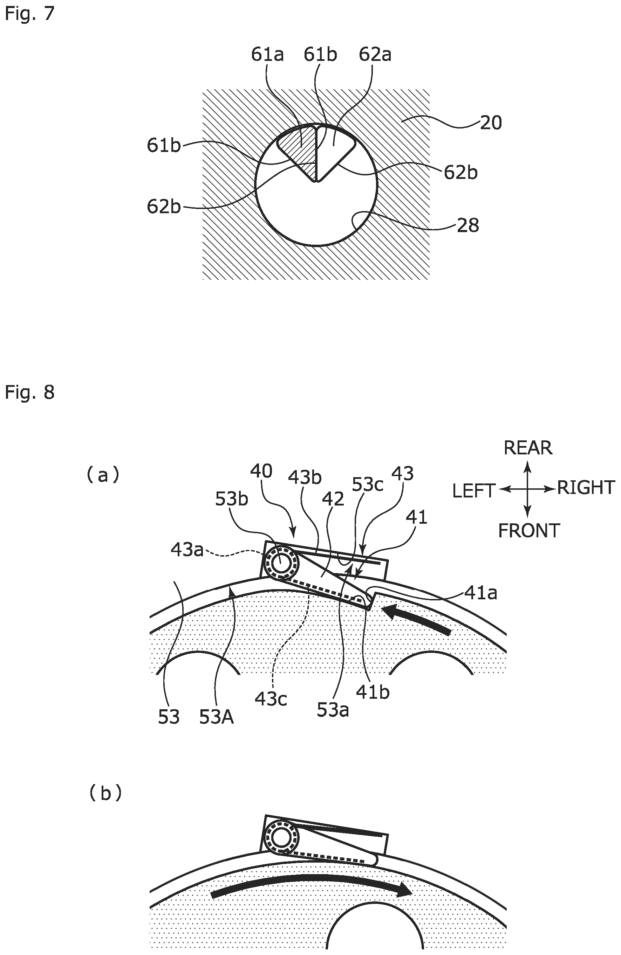

An extension portion 61a that extends downward from the columnar base is provided at the lower end of the drive shaft 61. The extension portion 61a has two side surfaces 61b that extend radially from the center of the drive shaft 61, and has a generally triangular shape when viewed in the axial direction (see FIG. 7).

An extension portion 62a that extends upward from the columnar base is provided at the upper end of the driven shaft 62. The extension portion 62a has two side surfaces 62b that extend radially from the center of the driven shaft 62, and has a generally triangular shape when viewed in the axial direction (see FIG. 7).

Referring to FIGS. 2 and 7, the drive shaft 61 and the driven shaft 62 are arranged coaxially with the extension portions 61a and 62a arranged side by side at positions offset in the circumferential direction, and the bases of these shafts are arranged vertically spaced apart from each other. Further, a lower end surface 61c of the extension portion 61a of the drive shaft 61 is disposed above and spaced apart from an upper surface 62d of the base of the driven shaft 62. Further, an upper end surface 62c of the extension portion 62a of the driven shaft 62 is disposed below and spaced apart from a lower surface 61d of the base of the drive shaft 61.

Accordingly, the drive shaft 61 can rotate independently, in other words, the driven valve body 20 can be in a non-following state relative to the drive valve body 10. Further, as shown in FIG. 7, when the extension portion 61a is rotated toward the extension portion 62a while the side surface 61b of the extension portion 61a on the rotation direction side is in contact with the side surface 62b of the extension portion 62a on the counter-rotation direction side, the drive shaft 61 and the driven shaft 62 can both rotate, in other words, the driven valve body 20 can be brought into a state of following the drive valve body 10.

Next, the ratchet mechanism 40 will be described with reference to FIGS. 6 and 8. Furthermore, for convenience of description, FIG. 6 is a diagram of the ratchet mechanism 40 when viewed from below, and FIG. 8 is a diagram of the ratchet mechanism 40 when viewed from above.

The ratchet mechanism 40 is mainly composed of the step portion 41, a hinge piece 42 as a contact member, and a torsion spring 43 as an elastic member. The hinge piece 42 and the torsion spring 43 function as protrusion members provided on the housing 50 side.

As described above, the step portion 41 is formed by notching a part of the outer peripheral portion 20A of the driven valve body 20.

Referring to FIG. 8, the hinge piece 42 is made of resin or metal, and is swingably attached to a fixed shaft 53b provided on a groove portion 53a of an inner peripheral portion 53A of the casing 53 and extending vertically.

The torsion spring 43 has a torsion portion 43a externally inserted into the fixed shaft 53b, one arm 43b contacting a peripheral side wall 53c forming the groove portion 53a, and the other arm 43c fixed to the hinge piece 42. Accordingly, the end of the hinge piece 42 opposite to the fixed shaft 53b side is biased radially inward.

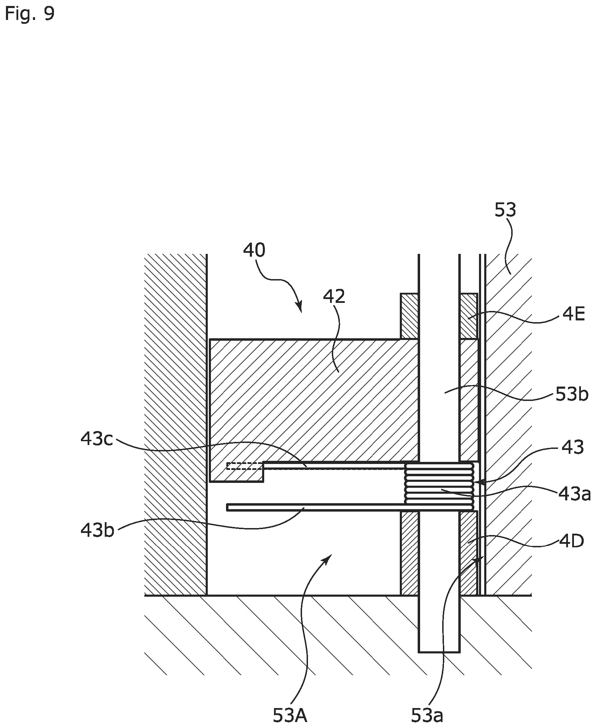

Referring to FIG. 9, since the hinge piece 42 is disposed above the torsion spring 43 and presses down the torsion spring 43 by the load of the hinge piece 42, the vertical deformation of the torsion spring 43 can be suppressed.

Further, washers 4D and 4E are disposed below the torsion spring 43 and above the hinge piece 42 on the fixed shaft 53b and restrict the vertical movement of the hinge piece 42 and the torsion spring 43. Furthermore, the material of the washers 4D and 4E is not particularly limited, but by using a low-friction material such as fluororesin, the rotation of the hinge piece 42 and the torsion spring 43 is less likely to be hindered.

As shown in FIG. 6, in this embodiment, the set of the hinge piece 42 and the torsion spring 43 is provided at a first position which is the 12 o'clock position when viewed from below, a second position which is the 8 o'clock position when viewed from below, and a third position which is the 4 o'clock position when viewed from below on the inner peripheral portion 53A of the casing 53. Hereinafter, there may also be a hinge piece 42 at a first position, a hinge piece 42' at a second position, and a hinge piece 42" at a third position.

Referring to FIG. 8A, the hinge piece 42 and the torsion spring 43 are capable of engaging with the end surface 41a of the step portion 41 of the driven valve body 20, which rotates counterclockwise when viewed from above, and are adapted to restrict further counterclockwise rotation of the driven valve body 20.

Further, referring to FIG. 8B, the hinge piece 42 and the torsion spring 43 are adapted to allow the rotation of the driven valve body 20 which rotates clockwise when viewed from above. Since the step portion 41 has the inclined surface 41b, the hinge piece 42 smoothly comes off the step portion 41 (see FIG. 8A).

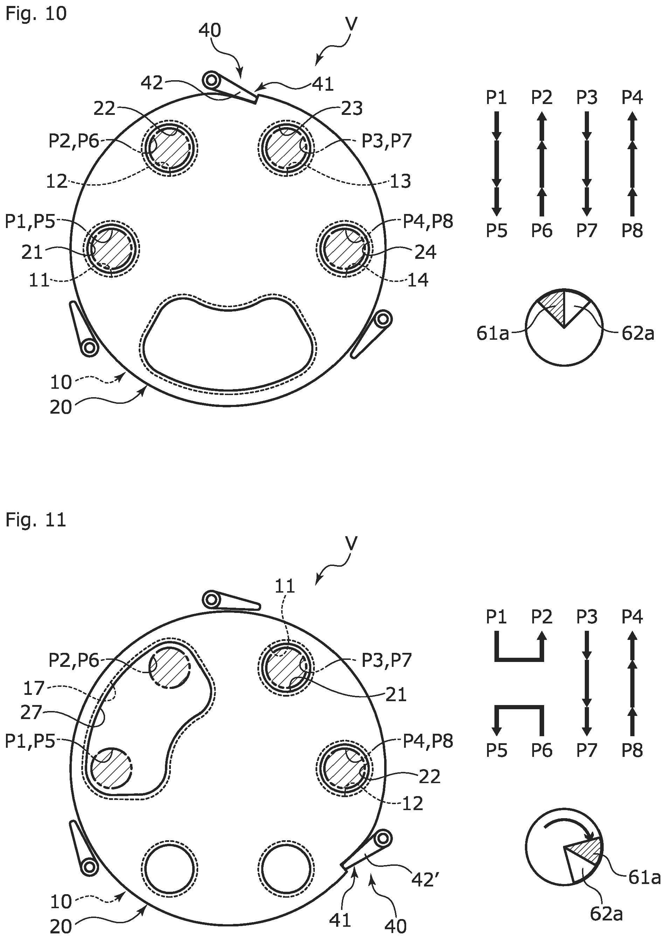

Next, an example of each flow path pattern of the switching valve V and each rotation position of the drive valve body 10 and the driven valve body 20 forming each flow path pattern will be described with reference to FIGS. 10 to 13. Furthermore, for convenience of description, the drive valve body 10 and the driven valve body 20 are seen from above. Further, the drive valve body 10 is indicated by a broken line, the driven valve body 20 is indicated by a solid line, and the first port P1 to the eighth port P8 are indicated by a two-dot chain line. Furthermore, each of the formed flow paths is indicated by diagonal lines.

{First flow path pattern}

As shown in FIG. 10, in a first flow path pattern of the switching valve V, the first port P1 communicates with the fifth port P5 through the through-hole 11 of the drive valve body 10 and the through-hole 21 of the driven valve body 20. The sixth port P6 communicates with the second port P2 through the through-holes 12 and 22. The third port P3 communicates with the seventh port P7 through the through-holes 13 and 23. The eighth port P8 communicates with the fourth port P4 through the through-holes 14 and 24. Furthermore, the first flow path pattern of the switching valve V is set as the initial position of the switching valve V.

At this time, the extension portion 61a of the drive shaft 61 and the extension portion 62a of the driven shaft 62 are disposed at approximately the 12 o'clock position while abutting against each other.

Further, at this time, the hinge piece 42 at the first position of the ratchet mechanism 40 is disposed at the engagement position between the driven valve body 20 and the step portion 41.

### {Second flow path pattern}

As shown in FIG. 11, a second flow path pattern of the switching valve V is in a state in which both the drive valve body 10 and the driven valve body 20 are rotated clockwise by approximately 120 degrees when viewed from above from the first flow path pattern.

In the second flow path pattern of the switching valve V, the first port P1 communicates with the second port P2 through the communication groove 17 of the drive valve body 10. The sixth port P6 communicates with the fifth port P5 through the communication groove 27 of the driven valve body 20. The third port P3 communicates with the seventh port P7 through the through-holes 11 and 21. The eighth port P8 communicates with the fourth port P4 through the through-holes 12 and 22.

At this time, the hinge piece 42' at the second position of the ratchet mechanism 40 is disposed at the engagement position between the driven valve body 20 and the step portion 41.

### {Third flow path pattern}

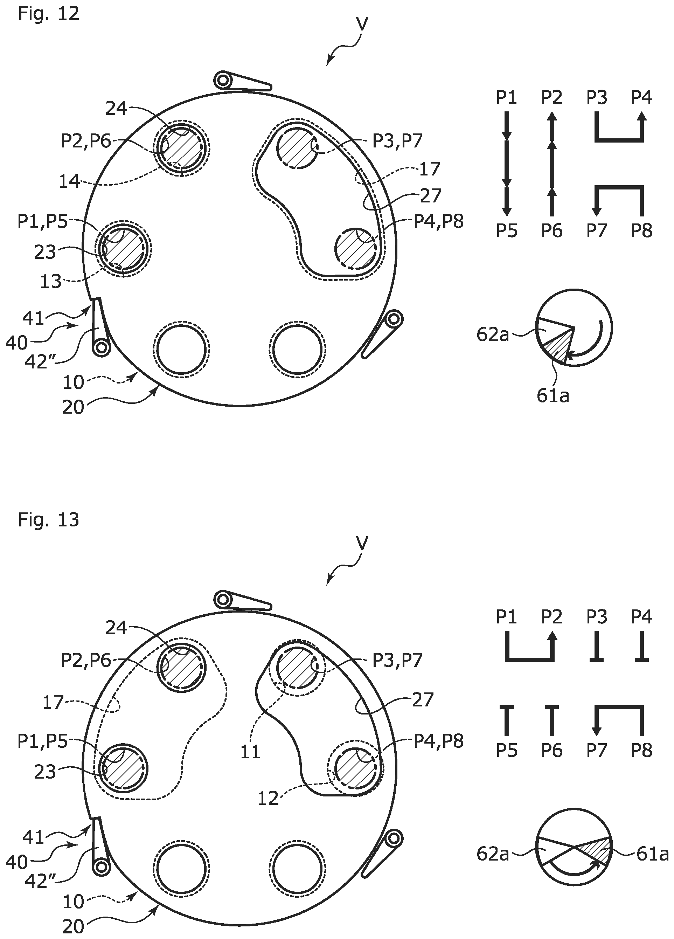

As shown in FIG. 12, a third flow path pattern of the switching valve V is in a state in which both the drive valve body 10 and the driven valve body 20 are rotated clockwise by approximately 120 degrees when viewed from above from the second flow path pattern.

In the third flow path pattern of the switching valve V, the first port P1 communicates with the fifth port P5 through the through-holes 13 and 23. The sixth port P6 communicates with the second port P2 through the through-holes 14 and 24. The third port P3 communicates with the fourth port P4 through the communication groove 17. The eighth port P8 communicates with the seventh port P7 through the communication groove 27.

At this time, the hinge piece 42" at the third position of the ratchet mechanism 40 is disposed at the engagement position between the driven valve body 20 and the step portion 41.

### {Fourth flow path pattern}

As shown in FIG. 13, the fourth flow path pattern of the switching valve V is in a state in which the drive valve body 10 is rotated alone counterclockwise by approximately 120 degrees when viewed from above from the third flow path pattern.

In the fourth flow path pattern of the switching valve V, the first port P1 communicates with the second port P2 through the communication groove 17. The eighth port P8 communicates with the seventh port P7 through the communication groove 27. The third port P3 and the fourth port P4 are closed by the upper surface of the driven valve body 20. The fifth port P5 and the sixth port P6 are closed by the lower surface of the drive valve body 10. That is, a working fluid is intensively supplied to the flow path connecting the first port P1 and the second port P2 and the flow path connecting the seventh port P7 and the eighth port P8.

At this time, the hinge piece 42" at the third position of the ratchet mechanism 40 is maintained at the engagement position between the driven valve body 20 and the step portion 41.

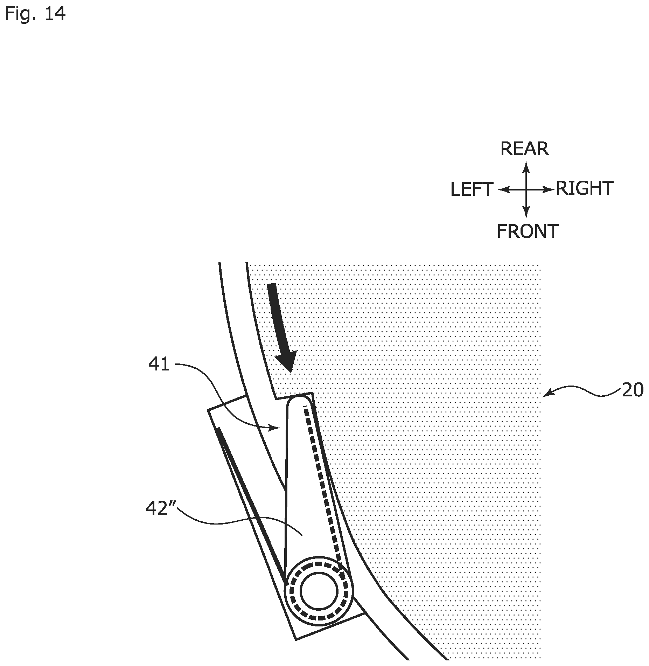

Next, an example of the state of the ratchet mechanism 40 when transitioning from the third flow path pattern to the fourth flow path pattern will be described with reference to FIG. 14. Furthermore, FIG. 14 shows the hinge piece 42" at the third position of the inner peripheral portion 53A of the casing 53.

As described above, the flow path pattern can be switched from the third flow path pattern to the fourth flow path pattern by rotating the drive valve body 10 alone counterclockwise (that is, to the other side) by approximately 120 degrees when viewed from above.

As shown in FIG. 14, in the third flow path pattern, the hinge piece 42" is disposed inside the step portion 41 of the driven valve body 20.

Then, the drive valve body 10 is rotated counterclockwise alone by approximately 120 degrees, but at this time, the counterclockwise rotation of the driven valve body 20 is restricted by the engagement between the hinge piece 42" and the step portion 41 even when a driving force of the drive valve body 10 acts on the driven valve body 20 due to external factors such as vibration, the positional deviation of the driven valve body 20 can be prevented. Therefore, the driven valve body 20 can be highly precisely disposed at the desired rotation position that forms the fourth flow path pattern.

Further, when the first flow path pattern is switched to the second flow path pattern, the hinge piece 42' at the second position is disposed at the engagement position with the step portion 41. Further, when the fourth flow path pattern is switched to the first flow path pattern, the hinge piece 42 at the first position is disposed at the engagement position with the step portion 41.

In this way, since the ratchet mechanism 40 of this embodiment has a plurality of circumferential restricting positions that restrict the clockwise rotation when viewed from below the driven valve body 20, the driven valve body 20 can be highly precisely disposed at each rotation position that forms the first flow path pattern to the fourth flow path pattern in the non-following state of the drive valve body 10 and the driven valve body 20.

Further, since the ratchet mechanism 40 mechanically restrict the rotation of the driven valve body 20 to the other side, the driven valve body 20 can be highly precisely disposed at each rotation position.

Further, since the hinge piece 42 is biased toward the driven valve body 20 by the torsion spring 43, the hinge piece 42 is reliably disposed at the engagement position with the step portion 41 when overlapping with the step portion 41 in the circumferential direction. Further, since the hinge piece 42 retracts to a position not engaging with the step portion 41 against the biasing force of the torsion spring 43 when the hinge piece 42 does not overlap with the step portion 41 in the circumferential direction, the operation of the driven valve body 20 is not hindered. Further, since a biasing force from the torsion spring 43 always acts on the outer peripheral surface 20a of the driven valve body 20, the operation of the driven valve body 20 is stabilized.

Further, since the step portion 41 is formed by notching the outer peripheral portion 20A of the driven valve body 20, the structure of the switching valve V can be made compact compared to a case where the step portion is provided to protrude radially outward from the outer peripheral surface of the driven valve body 20.

Further, the driven valve body 20 is provided with the through-holes 21, 22, 23, and 24 and the communication groove 27, and the step portion 41 is formed between the through-holes 22 and 23. Accordingly, the driven valve body 20 can be made compact while ensuring strength.

Further, since the hinge piece 42 engages with the step portion 41 from the outer peripheral surface 20a of the driven valve body 20, that is, engages with the step portion 41 from the radial direction as a direction different from the axial direction as the formation direction of the through-holes 21, 22, 23, and 24, it is possible to reduce the influence of the fluid pressure of the working fluid, flowing through the through-holes 21, 22, 23, and 24 provided in the axial direction and inside the housing 50 with respect to the hinge piece 42, on the engagement state between the hinge piece 42 and the step portion 41. Further, since the load of the driven valve body 20 does not influence the hinge piece 42 and also the load of the hinge piece 42 does not influence the driven valve body 20, gravity is less likely to influence the engagement between the hinge piece 42 and the step portion 41.

Furthermore, in this embodiment, a mode in which the switching valve V is switchable between four types of flow path patterns has been illustrated, but it is needless to say that the switching valve V can be switched between more types of flow path patterns. Further, as in this embodiment, when the hinge piece 42 engages with the step portion 41 in the radial direction, it is preferable that all through-holes extend in the axial direction.

### {Second embodiment}

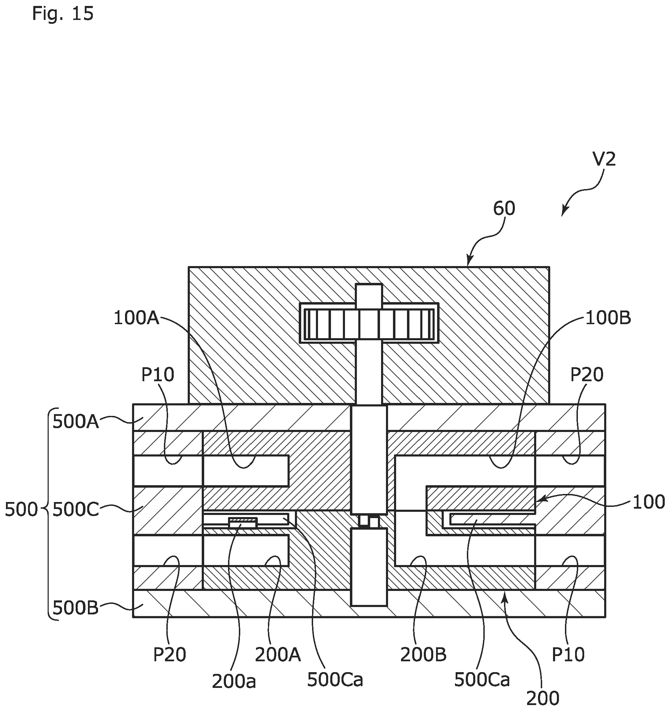

Next, a switching valve according to a second embodiment will be described with reference to FIG. 15. Furthermore, the description of the same configuration as in the first embodiment will be omitted.

As shown in FIG. 15, a switching valve V2 has a plurality of inlet ports P10 and outlet ports P20 provided in a casing 500C of a housing 500 (only two of each port are shown). An upper cover 500A and a lower cover 500B are not provided with a port.

The drive valve body 100 is provided with communication passages 100A and 100B (only one of each communication passage is shown). The communication passage 100A alone communicates the desired inlet port P10 with the outlet port P20. The communication passage 100B communicates the desired inlet port P10 with the outlet port P20 together with a communication passage 200B to be described later.

A driven valve body 200 is provided with the communication passages 200A and 200B (only one of each communication passage is shown). The communication passage 200A alone communicates the desired inlet port P10 with the outlet port P20. The communication passage 200B communicates the desired inlet port P10 with the outlet port P20 together with the communication passage 100B described above.

The drive valve body 100 and the driven valve body 200 rotate together or only the drive valve body 100 rotate alone to switch the communication state of each of the communication passages 100A, 100B, 200A, and 200B, thereby changing the combination of the inlet port P10 and the outlet port P20 which communicate with each other.

A protruding piece 200a that protrudes upward is provided on the upper surface of the driven valve body 200. The protruding piece 200a is formed by a leaf spring that is inclined upward from one side to the other side.

A plurality of protruding pieces 500Ca that protrude radially inward are provided on the inner peripheral surface of the casing 500C.

When the driven valve body 200 rotates to one side and the protruding piece 200a contacts the protruding piece 500Ca, the protruding piece 200a is vertically compressed and can pass between the driven valve body 200 and the protruding piece 500Ca.

On the other hand, when the driven valve body 200 rotates to the other side so that the protruding piece 200a contacts the protruding piece 500Ca, the protruding piece 200a is urged to restrict further rotation. The protruding piece 200a and the protruding piece 500Ca function as the restricting device.

When the drive valve body 100 is rotated alone to the other side, the movement of the driven valve body 200 to the other side is restricted even when a force to the other side is transmitted to the driven valve body 200, thereby preventing the positional deviation of the driven valve body 200. Further, since the protruding piece 500Ca engages with the protruding piece 200a from the axial upper surface of the driven valve body 200, that is, from the circumferential direction as the direction different from the radial direction as the formation direction of the openings on the side of the housing 500 in the communication passages 100A, 100B, 200A, and 200B, it is possible to reduce the influence of the fluid pressure of the working fluid, flowing through the communication passages 100A, 100B, 200A, and 200B provided in the radial direction and inside the housing 500 with respect to the protruding piece 200a, on the engagement state between the protruding piece 200a and the protruding piece 500Ca.

Furthermore, as in this second embodiment, when the protruding piece 200a engages with the protruding piece 500Ca in the circumferential direction, it is preferable that all through-holes extend in the radial direction.

Although the embodiments of the present invention have been described above with reference to the drawings, the specific configuration is not limited to these embodiments, and the present invention also includes modifications and additions that do not deviate from the scope of the present invention.

For example, in the above-described first embodiment, a mode in which the hinge piece is provided at three positions of the inner peripheral portion of the casing has been illustrated, but the number of the installation positions of the hinge pieces can be freely changed.

Further, in the above-described first and second embodiments, a mode in which the restricting device is the ratchet mechanism has been illustrated, but the restricting device may be, for example, a device in which the driven valve body is placed in a retraction position during rotation and locks the driven valve body when placed at a desired rotation position. The locking restricting device may have a larger rotational resistance force in the locked state than in the unlocked state, and may, for example, be composed of a groove provided on the outer peripheral portion of the driven valve body and a spring attached engagement member provided on the housing and biased radially inward of the driven valve body.

Further, in the above-described first embodiment, a mode in which the hinge piece engages with the step portion provided on the outer peripheral portion of the driven valve body has been illustrated, but the contact member may be adapted to engage with the driven shaft or a position on the driven valve body on the driven shaft side.

Further, in the above-described first embodiment, a mode in which the torsion spring is used as the elastic member has been illustrated, but a leaf spring or the like may be used. Further, if the elastic member has rigidity, the configuration of the contact member may be omitted and only the elastic member may engage with the driven valve body. In other words, the elastic member may serve as the contact member.

Further, in the above-described first embodiment, a mode in which the hinge piece is used as the contact member has been illustrated, but the present disclosure is not limited thereto. For example, an elastic member or the like may be provided in the inner peripheral portion of the housing to be crushed when the driven valve body rotates to one side and to elastically return when the driven valve body rotates to the other side so that the elastic member engages with the step portion of the driven valve body.

Further, the shape of the step portion is not limited to that of the first embodiment, and the shape may be such that the contact member can engage when the driven valve body rotate to the other side. Further, a plurality of step portions may be provided in the circumferential direction of the outer peripheral portion of the driven valve body.

Further, in the above-described first embodiment, a mode in which the hinge piece and the torsion spring are provided on the housing side and the step portion is provided on the driven valve body side has been illustrated, but the contact member and the elastic member may be provided in the driven valve body and the step portion may be provided on the housing side.

Further, in the above-described first embodiment, a mode in which four inlet ports and four outlet ports are provided has been illustrated, but the number of each of the inlet ports and the outlet ports may be two or more and the number can be freely changed. Further, the number of the inlet ports and the outlet ports may not be the same, but may be different.

Further, in the above-described first and second embodiments, a mode in which one drive valve body and one driven valve body are provided has been illustrated, but the number of the valve bodies can be freely changed.

Further, the drive valve body and the driven valve body are not limited to a disk shape, but can be freely changed to a fan shape, an arc shape, a C shape, or the like. Further, the drive valve body and the driven valve body may not be provided with a passage.

### {REFERENCE SIGNS LIST}

- 10: Drive valve body
- 10A: Outer peripheral portion
- 11 to 16: Through-hole (passage)
- 17: Communication groove (passage)
- 20: Driven valve body
- 20A: Outer peripheral portion
- 21 to 26: Through-hole (passage)
- 27: Communication groove (passage)
- 40: Ratchet mechanism (restricting device)
- 41: Step portion
- 42, 42', 42": Hinge piece (contact member)
- 43: Torsion spring (elastic member)
- 50: Housing
- 60: Drive unit
- 61: Drive shaft
- 61a: Extension portion
- 62: Driven shaft
- 62a: Extension portion
- 63: Drive device
- V: Switching valve

## Claims

1. A switching valve comprising:
a housing;
a drive valve body and a driven valve body which are disposed in a valve chamber formed inside the housing and configured to rotate relative to the housing; and
a drive device which is connected to the drive valve body and is configured to rotate the drive valve body,
wherein the housing is provided with a plurality of ports which are configured to communicate with the valve chamber and into and from which a fluid flows,
wherein when the drive valve body and the driven valve body rotate, a flow path is switchable by changing a combination of the plurality of ports to be connected,
wherein the drive valve body is configured to be rotatable in any one of a first circumferential direction and a second circumferential direction opposed to the first circumferential direction,
wherein the drive valve body has a drive shaft protruding toward the driven valve body,
wherein the driven valve body has a driven shaft protruding toward the drive valve body, and
wherein the switching valve further comprises a restricting device configured to restrict a rotation of the driven valve body in the second circumferential direction when power is transmitted from the drive shaft of the drive valve body to the driven shaft of the driven valve body upon a rotation of the drive valve body in the first circumferential direction.

2. The switching valve according to claim 1,
wherein the restricting device has a plurality of circumferential restricting positions.

3. The switching valve according to claim 1,
wherein the restricting device is a ratchet mechanism that includes a protrusion member provided on a housing side and a step portion provided on the driven valve body and engageable with the protrusion member and that is configured to allow the rotation of the driven valve body in the first circumferential direction and to restrict rotation of the drive valve body in the second circumferential direction.

4. The switching valve according to claim 3,
wherein the protrusion member has a contact member swingably provided on an inner peripheral portion of the housing accommodating the driven valve body and an elastic member configured to bias the contact member toward the driven valve body.

5. The switching valve according to claim 3,
wherein the step portion is formed by notching the driven valve body.

6. The switching valve according to claim 3,
wherein the driven valve body is formed in a disk shape and has a plurality of passages, and
wherein the step portion is formed between the passages.

7. The switching valve according to claim 6,
wherein the protrusion member configured to engage with the step portion in a direction different from an opening direction of an opening of the passage.

8. The switching valve according to claim 7,
wherein the passage is formed to vertically penetrate the driven valve body, and the step portion is formed on an outer peripheral surface of the driven valve body.
